# EUROPÄISCHE PATENTSCHRIFT

(11) **EP 3 337 920 B1**
(45) Veröffentlichungstag und Bekanntmachung des Hinweises auf die Patenterteilung: **14.08.2019**
(21) Anmeldenummer: 15734118.1
(22) Anmeldetag: 30.06.2015
(51) Int. Cl.: D02G 1/12

(54) **FORMTEIL FÜR EINEN DÜSENKERN, DÜSENKERN UND STAUCHKRÄUSELVORRICHTUNG ZUM STAUCHKRÄUSELN, AUFRÜSTKIT, ARRETIERUNGSVORRICHTUNG UND SETZELEMENT SOWIE VERFAHREN DAZU**
MOLDED PART FOR A NOZZLE CORE, NOZZLE CORE AND STUFF-CRIMPING DEVICE FOR CRIMPING, EXPANSION KIT, LOCKING DEVICE AND SETTING ELEMENT AS WELL AS METHOD THEREFOR
PIÈCE DE MISE EN FORME POUR UN NOYAU DE FILIÈRE, NOYAU DE FILIÈRE ET DISPOSITIF DE FRISAGE POUR FRISAGE PAR BOURRAGE, KIT D'ÉQUIPEMENT, DISPOSITIF D'ARRÊT ET ÉLÉMENT DE MISE EN PLACE, ET PROCÉDÉ CORRESPONDANT

(43) Veröffentlichungstag der Anmeldung: 27.06.2018
(73) Patentinhaber: Heberlein AG, 9630 Wattwil (CH)
(72) Erfinder: BERTSCH, Gotthilf, 9642 Ebnat-Kappel (CH); BUCHMÜLLER, Patrick, 9643 Krummenau (CH); FORRER, Peter, 9500 Wil (CH); RUOSS, Lukas, 9606 Bütschwil (CH); SIMMEN, Christian, 9630 Wattwil (CH)
(74) Vertreter: Hepp Wenger Ryffel AG
(86) Internationale Anmeldenummer: PCT/EP2015/064898
(87) Internationale Veröffentlichungsnummer: WO 2017/001000

(56) Entgegenhaltungen:
- EP-A1- 1 634 982
- JP-A- H06 123 033

## Beschreibung

Die vorliegende Erfindung betrifft ein Formteil für einen Düsenkern zum Stauchkräuseln, einen Düsenkern zum Stauchkräuseln, eine Düse zum Stauchkräuseln sowie eine Stauchkräuselvorrichtung zum Stauchkräuseln. Ein Aufrüstkit zum Aufrüsten einer Texturiermaschine, eine Arretierungsvorrichtung zur Arretierung einer Düse sowie eine Setzelement zur Aufnahme von Düsen sowie die entsprechenden Verfahren dazu gemäss den Oberbegriffen der unabhängigen Ansprüche.

Verschiedene Vorrichtungen, Düsen, Düsenkerne und Formteile zum Stauchkräuseln eines, vorzugsweise synthetischen, multifilen Fadens sind aus dem Stand der Technik bekannt. So ist beispielsweise aus der EP 1 634 982 B1 eine Düse und eine Vorrichtung zum Stauchkräuseln bekannt, welche ein metallisches Gehäuse und mindestens einen Düsenkern aus zwei Formteilen umfasst. Die Formteile sind jeweils über einen Passstift und eine Axialführung mit dem Gehäuse verbunden. Derartige Vorrichtungen und die dazugehörigen Formteile sind aufwendig in der Herstellung, empfindlich auf mechanische Beanspruchung und Wärmeausdehnung. Die komplizierte Gestaltung verhindert eine einfach Wartung und Reparatur der Vorrichtung, wobei gerade die Wärmeempfindlichkeit dieser Konstruktion ein häufiges Ersetzen einzelner Bauteile erfordert.

Es ist Aufgabe der Erfindung, diese und weitere Nachteile des Standes der Technik zu beheben. Insbesondere soll ein Formteil für einen Düsenkern bereitgestellt werden, welches einfach in der Fertigung und leicht austauschbar ist. Ebenso soll eine Düse zum Stauchkräuseln bereitgestellt werden, welche vorzugsweise die genannten Vorteile aufweist. Vorzugsweise soll es ermöglicht werden, bestehende Texturiermaschinen mit erfindungsgemässen Formteilen aufzurüsten. Eine vorteilhafte Arretierungsvorrichtung zur Arretierung von einer oder mehreren Düsen zum Stauchkräuseln und eine Setzelement zur Aufnahme von Düsen zum Stauchkräuseln soll ebenso bereitgestellt werden.

Diese und weitere Aufgaben werden durch die in den unabhängigen Patentansprüchen definierten Vorrichtungen und Verfahren gelöst. Weitere Ausführungsformen ergeben sich aus den abhängigen Patentansprüchen.

Ein erfindungsgemässes Formteil für einen Düsenkern zum Stauchkräuseln von Fäden und vorzugsweise zum Stauchkräuseln von synthetischen multifilen Fäden umfasst einen Keramikkörper mit einer Planfläche. In der Planfläche ist eine Aussparung zur Bildung zumindest eines Teils eines Düsenkanals angeordnet. Die Aussparung ist vorzugsweise zentral in der Planfläche angeordnet und bildet vorzugsweise einen halben Düsenkanal. In der Planfläche sind Aufnahmekonturen zur Aufnahme von Befestigungsmitteln angeordnet. Die Aufnahmekonturen befinden sich am Formteil lateral bezogen auf die Aussparung. Die Aufnahmekonturen sind, ausgehend von der Aussparung und entlang der Planfläche, in lateraler Richtung offen.

In Bezug auf die Planfläche weist das Formteil entlang der Aussparung eine longitudinale Ausdehnung auf. Das Formteil weist somit eine Planfläche auf, welcher Stirnseiten und laterale Seiten zugeordnet sind.

Befestigungsmittel ermöglichen es, das Formteil an einer geeigneten Aufnahme oder an einem geeigneten Gegenstück zu befestigen.

Die Ausbildung der Aufnahmekonturen, und zwar, dass sie in lateraler Richtung offen sind, ermöglicht es, das Formteil an dem Gegenstück zu befestigen, ohne dass die Befestigungsmittel vollständig entfernt werden müssen. Alternativ ist es auch möglich, oder vorstellbar, dass nur einige und damit nicht alle Befestigungsmittel entfernt werden müssen. Ein weiterer Vorteil von offenen Konturen ist, dass Spannungsspitzen, welche beispielsweise durch thermische Effekte entstehen können, verhindert werden können.

In einer bevorzugten Ausführungsform ist innerhalb der Aufnahmekontur des Formteils eine zur Planfläche des Formteils parallel versetzte Anschlagfläche angeordnet.

Dies ermöglicht einerseits eine von der Planfläche unabhängige Befestigung des Formteils. Damit können Beschädigungen oder Verletzungen der Planfläche vermieden werden. Andererseits ermöglicht eine parallel versetzte Anschlagfläche ebenfalls, dass diese entsprechend dem gewählten Befestigungsmittel ausgebildet ist oder ausgebildet werden kann, unabhängig von der Ausgestaltung der Planfläche.

Die Planflächen weisen vorzugsweise keine Ausnehmungen oder Durchgänge auf, insbesondere umfassen die Planflächen keine Ausnehmungen oder Durchgänge für Befestigungsmittel, welche sich vollumfänglich in der Planfläche befinden.

Das heisst, dass sich vorzugsweise innerhalb der Planfläche keine geschlossenen Konturen für Befestigungsmittel oder Sicherungsmittel befinden.

Offene Konturen ermöglichen einen Spannungsausgleich. Damit werden thermische oder mechanische Belastungsspitzen vermieden.

Das Formteil kann dabei an den lateralen Seiten Aufnahmekonturen aufweisen, wobei die lateralen Seiten des Formteils zwischen den Aufnahmekonturen durchgehend und im Wesentlichen parallel zur Aussparung ausgebildet sein können.

Das Formteil kann eine Verlängerung als Teil einer Nase aufweisen. Diese Nase ist vorzugsweise in einer Fadenbewegungsrichtung aus einem ersten Konus und einem zweiten Konus gebildet. An einem Querschnitt der Nase weist der erste Konus eine grössere Basis auf als der zweite Konus am selben Querschnitt der Nase.

Dies ermöglicht das Schaffen einer Austrittsnase für den Faden, welche mechanisch belastbar ist und einfach zu fertigen ist.

Das Formteil kann vorzugsweise einen Eintrittsbereich und einen Austrittsbereich aufweisen. Eintrittsbereich und Austrittsbereich sind bevorzugt stirnseitig oder an den Stirnseiten angeordnet. Der Eintrittsbereich oder der Austrittsbereich ist der Bereich, in welchem die Aussparung oder die Kontur des Formteils für den Zweck des Ein- oder Austritts des Fadens gesondert ausgebildet ist. Diese Bereiche erstrecken sich vorzugsweise jeweils auf ca. 20% der Gesamtlänge des Formteils von den Stirnseiten des Formteils. In einer bevorzugten Ausführungsform sind die Aufnahmekonturen in diesen Bereichen angeordnet und vorzugsweise nur in diesen Bereichen. Das heisst, dass sich dabei Aufnahmekonturen lediglich in diesen Bereichen befinden.

Dies ermöglicht es, dass die Planfläche im Wesentlichen frei von störenden Konturen oder Unterbrüchen ist, was einen positiven Einfluss auf die Festigkeit des Formteils hat.

Der Eintrittsbereich und der Austrittsbereich des Formteils ist jeweils der Bereich, an dem der Faden in die Aussparung eintritt, respektive austritt. Diese Bereiche können spezifisch gestaltet sein. So kann beispielsweise der Eintrittsbereich eine konisch zulaufende Öffnung aufweisen. Der Austrittsbereich ist vorzugsweise derart gestaltet, dass in diesem Bereich eine Nase wie vorliegend beschrieben angeordnet ist.

Zum Verhindern einer Bewegung des Formteils entlang einer Fadenbewegungsrichtung kann das Formteil Begrenzungsflächen an zumindest einer Aufnahmekontur aufweisen.

Eine Bewegung entlang der Fadenbewegungsrichtung heisst, dass sich das Formteil in oder entgegen der Fadenbewegungsrichtung bewegt. Diese Bewegung wird insbesondere durch Längenausdehnungen aufgrund thermischer Effekte verursacht.

Alternativ ist es vorstellbar, dass am Formteil Begrenzungskonturen an einer Flanschschnittstelle vorgesehen sind. Die Begrenzungsflächen oder Begrenzungskonturen sind dabei vorzugsweise im Wesentlichen rechtwinklig zur Fadenbewegungsrichtung angeordnet.

Bevorzugt weisen die Begrenzungsflächen oder Begrenzungskonturen jeweils eine erste und eine zweite Begrenzungsfläche in und entgegen der Fadenbewegungsrichtung auf. Dies ermöglicht einerseits die genaue Positionierung eines Formteils, andererseits wird dabei zumindest ein Bereich des Formteils unabhängig der Temperatur an einen vorbestimmten Ort gehalten. Vorzugsweise befinden sich derartige Begrenzungsflächen oder Begrenzungskonturen jeweils nur am Eintrittsbereich oder am Austrittsbereich des Formteils.

Die Aussparung im Formteil kann in Fadenbewegungsrichtung nacheinander angeordnet zumindest einen ersten Bereich und einen zweiten Bereich aufweisen, wobei der zweite Bereich eine grössere Querschnittsfläche als der erste Bereich aufweist.

Durch unterschiedliche Bereiche können innerhalb des Formteils für unterschiedliche Fäden spezifische Eigenschaften eingestellt werden. Mit unterschiedlichen Formteilen ist es dabei möglich, unterschiedliche Eigenschaften für einen spezifischen Faden oder multifilen Faden einzustellen.

Im Formteil kann ein Einlass für ein Fluid, vorzugsweise Heissluft oder Dampf vorgesehen sein, welcher Einlass vorzugsweise zumindest teilweise entlang der Aussparung angeordnet ist und in diese mit einer Mündung mündet. Eine derartige Mündung kann sich dabei an beiden lateralen Seiten der Aussparung befinden.

Eine in Fadenbewegungsrichtung gerichtete Beaufschlagung der Fäden und damit eine Texturierung der Fäden wird somit ermöglicht.

Die Mündung des Fluideinlasses befindet sich dabei vorzugsweise zwischen einer ersten und einer zweiten Gruppe aus Aufnahmekonturen.

Eine derartige Anordnung ermöglicht es, dass sich der Fluideinlass somit in Wesentlichen innerhalb der Planfläche befindet, ohne dass sich beispielsweise mit den Befestungsmitteln an den Aufnahmekonturen eine Wechselwirkung ergibt.

Eine erste Gruppe von Aufnahmekonturen weist vorzugsweise eine erste Art von Aufnahmekonturen mit einer Anschlagfläche und eine zweite Art von Aufnahmekonturen mit einer Begrenzungsfläche auf und eine zweite Gruppe von Aufnahmekonturen weist vorzugsweise nur Aufnahmekonturen der ersten Art auf. Alternativ ist es auch möglich, dass die zweite Gruppe ebenfalls eine Aufnahmekontur zweiter Art aufweist. Die Aufnahmekonturen zweiter Art können dabei auf der gleichen Seite der Aussparung angeordnet sein. Eine überkreuzte Anordnung ist aber ebenfalls möglich. Die genaue Wahl der Arten der Aufnahmekonturen und deren Anordnung am Formteil und in einzelnen Gruppen ist dabei vom gewünschten Zweck oder von der gewünschten Funktion abhängig.

Ein weiterer Aspekt der Erfindung betrifft ein Düsenkern, welcher mindestens zwei Formteile wie vorliegend beschrieben umfasst.

Die Formteile sind vorzugsweise baugleich zueinander ausgebildet, wobei die jeweiligen Aussparungen der Formteile einen Düsenkanal mit Einlass und Auslass bilden.

Begrenzungsflächen oder Begrenzungskonturen an den Formteilen befinden sich bei beiden Formteilen in selben Bereich. Die Verformungen der Formteile und insbesondere die Wärmeausdehnung erfolgt damit bei beiden Formteilen synchron und in die gleiche Richtung.

Der Einlass kann vorzugsweise wie vorliegend beschrieben konisch geformt sein und der Auslass kann vorzugsweise eine Nase wie vorliegend beschrieben bilden.

Ein derartiger Düsenkern weist die Vorteile der Formteile auf und ist einfach zu fertigen, da sie aus gleichartigen Einzelteilen herstellbar ist.

Ein weiterer Aspekt der Erfindung betrifft eine Düse zum Stauchkräuseln von Fäden und vorzugsweise von synthetischen multifilen Fäden. Die Düse umfasst einen Düsenkern, und vorzugsweise einen Düsenkern wie vorliegend beschrieben. Die Düse oder der Düsenkern umfasst mindestens zwei Formteile und vorzugsweise mindestens zwei Formteile wie vorliegend beschrieben. Die Formteile weisen je zwei laterale Seiten auf.

Die lateralen Seiten erstrecken sich im Wesentlichen in einer Förderrichtung der Fäden. Die Formteile weisen je eine Planfläche auf, welche sich zwischen den lateralen Seiten befindet. Die Planflächen weisen zur Bildung eines Düsenkanals je mindestens eine Aussparung auf.

Die Düse weist Flansche auf, welche zumindest teilweise aus metallischem Material und vorzugsweise Stahl gefertigt sind. An ihren lateralen Seiten weisen die Formteile eine Aufnahmekontur zur Aufnahme von Befestigungsmitteln auf. Die Formteile sind dabei mit den Befestigungsmitteln an je mindestens zwei Flanschen befestigt oder befestigbar.

Die Aufnahmekonturen sind dabei vorzugsweise wie vorliegend beschrieben ausgebildet und in einer lateralen Richtung offen.

Aufnahmekonturen an lateralen Seiten der Formteile ermöglichen einerseits erst das Befestigen der Formteile an Flanschen, andererseits erlaubt es eine derartige Befestigung, dass die Formteile lediglich am Rande der Planfläche beansprucht werden. Das Befestigen der Formteile an Flanschen ermöglicht es ausserdem, eine spezifische Schnittstelle zu erhalten, welche durch die Flansche ausgebildet ist. Dabei können die Flansche beispielswiese derart ausgebildet sein, dass sie beispielsweise mit einer Texturiermaschine in Wirkverbindung bringbar sind.

Vorzugsweise sind die Flansche aus einzelnen Abschnitten eines Ringes gebildet. Dies ermöglicht eine einfache Fertigung und eine rotationssymmetrische Verwendung der Flansche.

Die Düse kann mindestens zwei Gehäuse umfassen, welche zumindest teilweise aus metallischem Material und vorzugsweise Stahl bestehen. Je ein Gehäuse kann vorzugsweise einstückig mit je mindestens zwei Flanschen ausgebildet sein. Dabei können die mindestens zwei Formteile der Düse zumindest teilweise von je einem Gehäuse umgeben sein.

Diese ermöglicht das Bereitstellen einer Düse, in welcher die Formteile in einer definierten Position montierbar sind, wobei sich dabei das Formteil und die Flansche in jeweils zueinander definierten Positionen befinden. Damit ist die Düse auf einfache Arte und Weise in eine Texturiermaschine einsetzbar.

Zwischen den Formteilen und dem Gehäuse können sich jeweils eine oder mehrere elastische Elemente und vorzugsweise Dichtungen, welche vorzugsweise selbstklebend ist, befinden oder darin abgeordnet sein.

Dies ermöglicht es einerseits das Gehäuse und das Formteil thermisch zu trennen und dabei eine Wärmeübertragung zu reduzieren. Die Reduktion der Wärmeübertragung begünstigt eine gleichmässige Wärmeverteilung innerhalb des Formteils. Wärmeunterschiede von verschiedenen Bereichen des Formteils zueinander können somit verringert werden. Andererseits können damit Unebenheiten in den Einzelteilen und an ihren Schnittstellen ausgeglichen werden. Somit können Spannungen in den Einzelteilen reduziert oder verhindert werden.

Die Befestigungsmittel können Schrauben und/oder Stifte aufweisen. Schrauben befestigen dabei das Formteil und halten das Formteil in einer rechtwinkligen Richtung zur Planfläche an Ort. Die Stifte können derart angeordnet sein, dass sie jeweils nur entgegen einer einzelnen Bewegungskomponente wirken, so kann beispielsweise ein Stift entgegen einer lateralen Verschiebung wirken und zwei weitere Stifte entgegen einer Verschiebung in der Fadenbewegungsrichtung. Mit einer zusätzlichen Schraube und drei Stiften ist das Formteil damit in allen drei Achsen gesichert.

Es ist jedoch ebenfalls vorstellbar, dass ein Verschieben in lateraler Richtung mittels einer dazu ausgebildeten Flanke am Formteil verhinderbar ist.

Die Düse ist vorzugsweise derart ausgebildet, dass zumindest einer der Flansche je Formteil Gleitflächen aufweist, welche derart ausgebildet sind, dass eine Bewegung zum Beispiel aufgrund thermischer Ausdehnung des jeweiligen Formteils in Fadenbewegungsrichtung ermöglicht ist.

Vorzugsweise sind die Gleitflächen derart ausgebildet, dass ein Verschieben in lateraler Richtung verhindert oder verhinderbar ist.

Diese ermöglicht, dass das Formteil im Bereich eines ersten Flansches zumindest in Fadenbewegungsrichtung fix befestigt ist, und sich im Bereich des zweiten Flansches jedoch ausdehnen kann.

Ein weiterer Aspekt der Erfindung betrifft eine Düse zum Stauchkräuseln von Fäden, insbesondere eine Düse wie vorliegend beschrieben, wobei die Düse einen Düsenkern umfasst. Die Düse umfasst vorzugsweise einen Düsenkern wie vorliegend beschrieben.

Die Düse oder der Düsenkern umfasst mindestens zwei Formteile, vorzugsweise wie vorliegend beschrieben. Die Formteile weisen je eine Planfläche auf. Die Planflächen weisen zumindest je eine Aussparung zur Bildung eine Düsenkanals auf. Die Düse weist Flansche auf, welche zumindest teilweise aus metallischem Material und vorzugsweise aus Stahl gefertigt sind. Die Flansche sind jeweils mit einem Formteil des Düsenkerns verbunden. Mindestens ein Flansch und vorzugsweise jeder Flansch jedes Formteils weist mindestens eine nicht rotationssymmetrische Arretierungsstruktur auf, welche zur Rotationssicherung in einer Arretierungsvorrichtung einer Texturiermaschine ausgebildet ist.

Dies ermöglicht das Einsetzen oder Befestigen oder Arretieren und/oder eine Kombination dieser Zwecke in einer Texturiermaschine.

Dabei wird durch eine derartige Arretierungsstruktur eine genaue Positionierung ermöglicht.

Eine Düse wie vorliegend beschrieben ist vorzugsweise derart ausgebildet, dass mindestens zwei Formteile zueinander baugleich ausgebildet sind und die Aussparungen einen Düsenkanal mit Einlass und Auslass bilden, wie vorliegend beschrieben.

Dies ermöglicht einen einfachen Aufbau und eine einfache Fertigung einer derartigen Düse. Mindestens ein Flansch jedes Formteils und vorzugsweise jeder Flansch jedes Formteils kann ein Führungselement zur Führung in einer Aufnahmekontur einer Aufnahme einer Texturiermaschine zur Einsetzung der Düse aufweisen. Das Führungselement kann dabei beispielsweise als Steg oder aus einem, zwei oder mehreren Bolzen ausgebildet sein.

Dadurch wir ein passgenaues Einsetzen in eine Texturiermaschine ermöglicht was die Austauschbarkeit der Düse ermöglicht.

Am Austritt der Fäden aus dem Düsenkern kann die Düse, insbesondere der Düsenkern, eine Nase aufweisen, wobei die Nase wie vorliegend beschrieben ausgebildet sein kann. Dabei kann die Nase maximal 12 mm, vorzugsweise 10 mm, und besonders bevorzugt maximal 7.5 mm lang sein. Die Nase befindet sich in einem Austrittsbereich des Düsenkerns und ist in Fadenbewegungsrichtung zulaufend. Vorzugsweise umfasst die Nase mehrerer Konusse wie vorliegend beschrieben, welche insbesondere jeweils einen Winkel von 60 Grad aufweisen.

Ein weiterer Aspekt der Erfindung betrifft eine Stauchkräuselvorrichtung zum Stauchkräuseln von Fäden und vorzugsweise von synthetischen multifilen Fäden. Die Stauchkräuselvorrichtung umfasst eine Düse wie vorliegend beschrieben und eine Stauchkammer, welche in Fadenbewegungsrichtung der Düse nachgeordnet ist.

Damit kann eine vollständige Stauchkräuselvorrichtung zur Verfügung gestellt werden.

Ein weiterer Aspekt der Erfindung betrifft einen Aufrüstkit zum Aufrüsten einer Texturiermaschine. Der Aufrüstkit umfasst zumindest ein Formteil wie vorliegend beschrieben oder eine Düse wie vorliegend beschrieben. Der Aufrüstkit umfasst ausserdem ein Einlaufelement für eine Stauchkammer, wobei das Einlaufelement einen Aufnahmebereich für eine Nase eines Düsenkerns aufweist, welche Nase in einer Fadenbewegungsrichtung aus einem ersten Konus und einem zweiten Konus gebildet ist. Der erste Konus weist an einem Querschnitt der Nase eine grössere Basis auf als der zweite Konus am selben Querschnitt der Nase.

Dies ermöglicht das Aufrüsten und Aufwerten einer bestehenden Texturiermaschine auf einfache Art.

Der Aufrüstkit kann eine oder mehrere Arretierungsvorrichtungen wie nachfolgend beschrieben umfassen.

Düsen, wie vorliegend beschrieben, sind in Texturiermaschinen eingesetzt oder einsetzbar.

Ein weiterer Aspekt der Erfindung betrifft daher eine Arretierungsvorrichtung zur Arretierung von einer oder mehreren, vorzugsweise drei, Düsen zum Stauchkräuseln insbesondere wie vorliegend beschrieben. Die Arretierungsvorrichtung ist insbesondere zur Arretierung einer derartigen Düse in einer Texturiermaschine ausgebildet. Die Arretierungsvorrichtung umfasst mindestens einen Arretierungsträger und mindestens ein und vorzugsweise mehrere Arretierungselemente. Die Arretierungselemente weisen mindestens eine Ausnehmung zur Aufnahme einer Arretierungsstruktur einer Düse auf. Die Arretierungselemente sind auf dem Arretierungsträger befestigt oder befestigbar. Die Arretierungselemente sind derart angeordnet oder anordenbar, dass eine gerichtete Kraft auf die Arretierungselemente in Richtung einer in die Ausnehmung eingesetzten Düse wirkt.

Somit können Düsen platziert werden und an einem gewünschten Ort und in einer gewünschten Lage fixiert und/oder arretiert werden. Die Arretierungsvorrichtung ermöglicht einen Stauchkräuselbetrieb.

Die gerichtete Kraft kann durch mindestens eine und vorzugsweise zwei oder mehr elastische Elemente der Arretierungsvorrichtung, und insbesondere Federn bereitgestellt werden.

Eine derartige Arretierungsvorrichtung ist damit kostengünstig und unter der Verwendung von Normteilen herstellbar.

Die Arretierungselemente können lösbar, insbesondere mit einem Abdeckelement und Schrauben, am Arretierungsträger befestigt oder befestigbar sein.

Somit ist ein Austausch und die Wartung der einzelnen Elemente ermöglicht.

Der Arretierungsträger kann zumindest teilweise aus Kunststoff und vorzugsweise aus Glasfaser verstärktem Epoxid gefertigt sein.

Dies gewährleistet einen formstabilen Arretierungsträger, der in Bezug auf thermische Einflüsse relativ unempfindlich ist.

Die Arretierungselemente der Arretierungsvorrichtung sind vorzugsweise zumindest teilweise aus Metall und vorzugsweise aus Stahl gefertigt. Dadurch sind die Arretierungselemente stabil.

Ein weiterer Aspekt der Erfindung betrifft ein Setzelement zur Aufnahme von Düsen zum Stauchkräuseln, insbesondere für Düsen wie vorliegend beschrieben. Das Setzelement umfasst mindestens einen Griff und mindestens ein Aufnahmeelement. Eine Halterung, welche drehbar in dem Aufnahmeelement gelagert ist, ist vorgesehen. Ebenfalls vorgesehen ist ein Betätigungselement zur Drehung der Halterung. Die Halterung ist zumindest zwischen einer Haltestellung zur Haltung der Düse in dem Aufnahmeelement und einer Freigabestellung zur Aufnahme und Abgabe der Düse vom Aufnahmeelement bewegbar.

Ein derartiges Setzelement ermöglicht das Einsetzen und Entfernen einer Düse zum Stauchkräuseln in eine Texturiermaschine. Dabei ermöglicht der Griff das sichere Halten des Setzelementes. Vorzugsweise ist der Griff aus einem wärmeisolierenden Material gefertigt oder umfasst wärmeisolierendes Material. Dies ermöglicht ebenfalls das Auswechseln einer Düse zum Stauchkräuseln beispielsweise während eines Betriebsunterbruches, wenn die Maschine oder die Düse zur Umgebung erhöhte Temperaturen aufweist.

Ein derartiges Setzelement ermöglicht es, die Düse aufzunehmen, ohne mit der Düse in Kontakt zu kommen. Dies wird ebenfalls durch das Betätigungselement unterstützt und/oder ermöglicht.

Die Halterung des Setzelementes kann als in Umfangsrichtung offener und vorzugsweise über ungefähr die Hälfte des Umfangs offener Zylinder mit einem vorzugsweise kreisförmigen Querschnitt ausgebildet sein.

Dies ermöglicht damit die Aufnahme einer ersten Hälfte eines Düsenkerns und daher eines Formteils mit zumindest zwei Flanschen wie vorliegend beschrieben.

Das Aufnahmeelement kann eine Aufnahmearretierung zur Arretierung der Halterung aufweisen. Das Arretieren der Halterung verhindert ein unerlaubtes oder unerwünschtes Drehen oder Bewegen der Halterung und sichert eine Düse, welche von dem Setzelement gehalten ist, gegen Verlust. Die Aufnahmearretierung kann dabei als Stift ausgebildet sein, wobei der Stift in eine Verschlussstellung und in eine Offenstellung bringbar ist. Alternativ wäre es ebenfalls vorstellbar, eine Kugel, vorzugsweise eine federnd gelagerte Kugel vorzusehen, die in Arretierungselemente, beispielsweise Öffnungen oder Versenkungen, der Halterung eingreift. Solche Arretierungselemente können zylinderförmig sein und beispielsweise alle 45° am Halteelement angeordnet sein. In der Verschlussstellung wird dabei eine Drehbewegung der Halterung verhindert. Die Vorteile einer derartigen Arretierung sind vorliegend beschrieben.

Ein weiterer Aspekt der Erfindung betrifft ein Verfahren zur Herstellung von stauchgekräuselten Fäden und/oder Garnen , insbesondere ein Verfahren zur Herstellung von stauchgekräuselten synthetischen multifilen Fäden. Die Fäden werden mit Hilfe eines Formteils wie vorliegend beschrieben oder eines Düsenkerns wie vorliegend beschrieben oder einer Düse wie vorliegend beschrieben stauchgekräuselt.

Die Erfindung wird nachfolgend anhand von Figuren erläutert. Es zeigen:
- Figur 1:: Eine erste Ausführungsform eines Formteils
- Figur 2:: Eine zweite Ausführungsform eines Formteils
- Figur 3:: Eine Setzelement und eine Arretiervorrichtung in einer Texturiermaschine
- Figur 4:: Das Setzelement aus Figur 3
- Figur 5:: Eine Rückansicht des Formteils aus Figur 1
- Figur 6:: Das Setzelement gemäss Figur 3 in einer weiteren Ansicht
- Figur 7:: Ein Aufrüstkit
- Figur 8:: Ein Einlaufelement

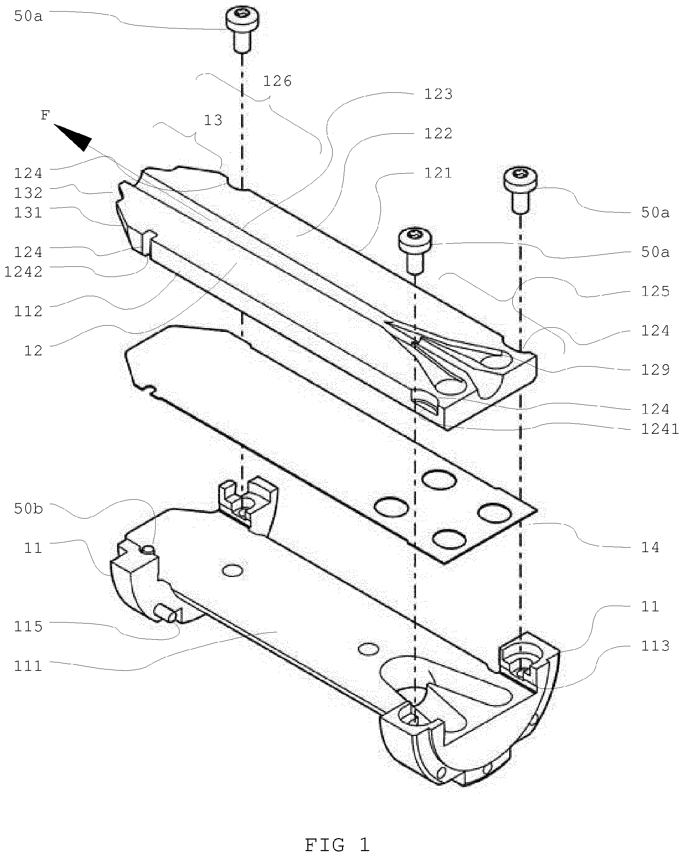

Figur 1 zeigt eine erste Ausführungsform eines erfindungsgemässen Formteiles 12. Das Formteil 12 ist in einem Gehäuse 111 angeordnet.

Das Formteil 12 besteht im Wesentlichen aus einem Keramikkörper 121 und weist eine Planfläche 122 auf. Das Formteil 12 weist einen Eintrittsbereich 125 und einen Austrittsbereich 126 auf.

Das Gehäuse 111 weist zwei Flansche 11 auf. Drei Schrauben 50a schützen das Formteil 12 vor einem Herausfallen aus dem Gehäuse 111.

Im Eintrittsbereich 125 weist das Formteil 12 eine konische Erweiterung auf und im Austrittsbereich 126 eine Nase 13. Die Nase 13 weist zwei hintereinander angeordnete Konusse 131 und 132 auf. Beide Konusse 131, 132, weisen einen Winkel von 60 Grad auf. Der Konus 131 weist an einer Querschnittsfläche durch das Formteil 12 eine grössere Basis auf als der Konus 132 an derselben Querschnittsfläche. Die Bereiche 125 und 126 definieren jeweils Stirnseiten. Eine Aussparung 123 erstreckt sich längs durch das Formteil 12. Beidseitig zur Aussparung 123 befinden sich laterale Seiten, welchen Aufnahmekonturen 124 zugeordnet sind. Die Aufnahmekontur 124, in der vorliegenden Figur auf der rechten Seite, weist eine Anschlagfläche 1241 auf, welche zur Planfläche 122 parallel versetzt ist. Die Schrauben 50a sind im eingebautem Zustand mit der Unterseite ihres Kopfes zu diesen Anschlagsflächen 1241 beabstandet, so, dass keine Kräfte der Schrauben 50a auf diese Flächen wirken. Eine Fixierung rechtwinklig zur der Planfläche 122 findet vorzugsweise durch den Zusammenbau eines Düsenkerns statt, wobei eine Planfläche 122 eines ersten Formteils auf die Planfläche 122 eines zweiten Formteils wirkt.

Innerhalb der Planfläche 122 ist ein Fluideinlass 129 angeordnet, welcher in die Aussparung 123 mündet. Der Fluideinlass 121 erstreckt sich im Wesentlichen entlang der Aussparung 123 sowie beidseits der Aussparung 123. In der vorliegenden Figur links ist eine Aufnahmekontur 124 angeordnet, welche zwei Begrenzungsflächen 1242 aufweist. Die Begrenzungsflächen 1242 sind im Wesentlichen rechtwinklig zu einer Fadenbewegungsrichtung F angeordnet, wobei eine Begrenzungsfläche 1242 derart angeordnet ist, dass Bewegungen in Fadenbewegungsrichtung F aufgenommen werden können und eine Begrenzungsfläche 1242 derart angeordnet, dass Bewegungen entgegen der Fadenbewegungsrichtung F aufgenommen werden können.

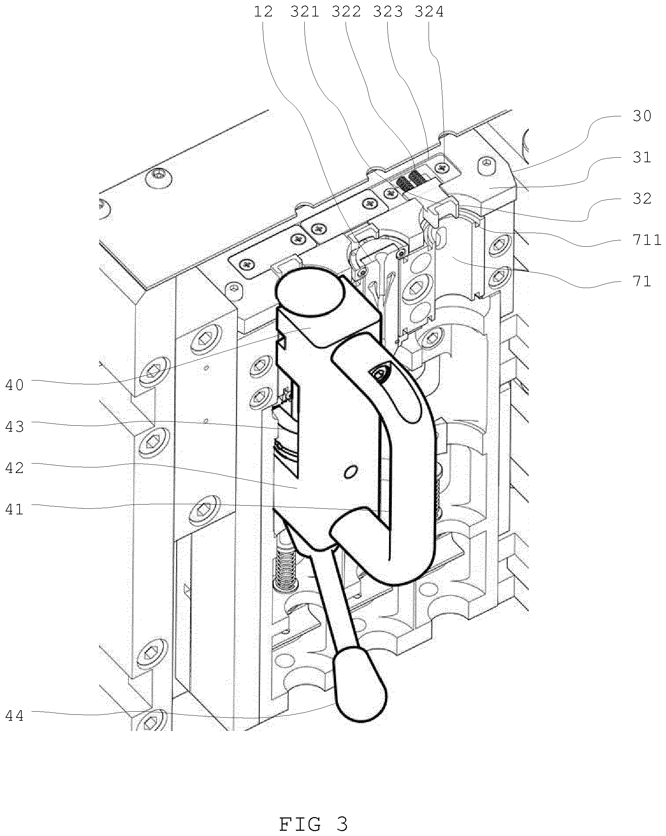

Figur 1 zeigt ebenfalls ein Gehäuse 111, welches vorliegend aus Stahl gefertigt ist. Beidseits des Gehäuses befinden sich Flansche 11. An den Flanschen 11 sind Führungselemente 115 angeordnet, welche vorliegend als einzelne Bolzen ausgebildet sind. Die Führungselemente 115 ermöglichen das geführte Einsetzen der in Figur 1 gezeigten Düsenhälfte in einer Texturiermaschine und korrespondieren mit einer Aufnahmekontur 711 einer Texturiermaschine (siehe Figur 3).

Das Gehäuse 111 und die Flansche 11 sind vorliegend einstückig gefertigt. Die Flansche 11 weisen Gleitflächen 113 auf, die es ermöglichen, dass sich ein im Gehäuse 111 befestigtes Formteil 12 in Fadenbewegungsrichtung F ausdehnen kann. Die Gleitflächen 113 wirken mit den Flanschschnittstellen 112 zusammen und verhindern ein laterales Verschieben des Formteils 12. Im Gehäuse 111 ist eine Dichtung 14 als elastisches Element angeordnet. Durch Befestigung des Formteils 12 im Gehäuse 111 sind Befestigungsmittel vorgesehen, wobei vorliegend zur Befestigung drei Schrauben 50a verwendet sind. Ein weiteres Befestigungsmittel ist als Stift 50b ausgebildet.

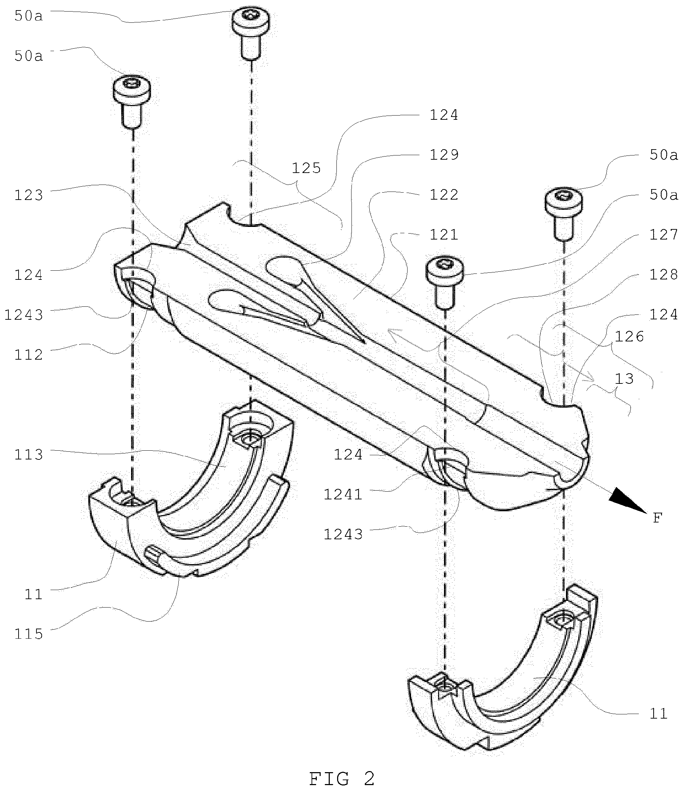

Figur 2 zeigt eine weitere erfindungsgemässe Ausführungsform eines Formteils 12. Im Unterschied zum Formteil 12 aus Figur 1 weist das Formteil 12 aus Figur 2 einen im Wesentlichen halbkreisförmigen Querschnitt auf. Das Gehäuse 111 (siehe Figur 1) ist vorliegend lediglich als zwei einzelne Flansche 11 ausgebildet. An den Flanschen 11 befinden sich Führungselemente 115, welche im Gegensatz zu den Führungselementen 115 aus Figur 1 als Steg ausgebildet sind. Die Planfläche 122 des Formteils 12 ist im Wesentlichen gleichartig ausgebildet wie die Planfläche 12 aus Figur 1. Im Unterschied dazu befinden sich am Formteil 12 aus Figur 2 vier gleichartige Aufnahmekonturen 124 mit Anschlagflächen 1241. An den Aufnahmekonturen befinden sich keine Begrenzungsflächen 1242 (siehe Figur 1). Anstelle dessen befindet sich am Formteil 12 eine Flanschschnittstelle 112, welche mit Gleitflächen 113 des Flansches 11 zusammen wirkt. An der Flanschschnittstelle 112 befinden sich Begrenzungskonturen 1243, welche eine Verschiebung des Formteils 12 in einer Fadenbewegungsrichtung F verhindern. Somit ist das Formteil 12 an zumindest einem Flansch 11 ortsfest gehalten. An den Aufnahmekonturen 124 müssen keine Begrenzungsflächen vorgesehen werden, um eine derartige Verschiebung zu verhindern.

In der Planfläche 122 ist eine Aussparung 123 angeordnet, welche vorliegend zwei Bereich umfasst, einen ersten Bereich 127 und einen zweiten Bereich 128. Der zweite Bereich 128 weist einen Querschnitt auf, der im Vergleich zum ersten Bereich 127 grösser ist. Der erweiterte Querschnitt des zweiten Bereiches 128 befindet sich an einem Austrittsbereich 125 des Formteils 12. Das Formteil 12 aus der Figur 2 ist damit für Garndicken grösser 1800 dtex (Polypropylen) vorgesehen, wohingegen das Formteil 12 aus Figur 1 für dünnere Garne vorgesehen ist. Die Garnkanalquerschnitte der Formteile 12 der Figuren 1 und 2 sind gegenseitig austauschbar. In diesem Austrittsbereich 125 befindet sich ebenfalls eine Nase 13, die gleichermassen ausgebildet ist wie die Nase 13 aus der Figur 1. Das Formteil 12 in der Figur 2 weist im Austrittsbereich 126 gleichermassen wie im Eintrittsbereich 125 eine Flanschschnittstelle auf, wobei die Flanschschnittstelle 112 im Austrittsbereich 126 ebenfalls Begrenzungskonturen 1243 aufweist. Damit sind die Flansche 11 unverschiebbar mit dem Formteil 12 in Verbindung. Eine Ausdehnung in Fadenbewegungsrichtung F kann somit in einer Aufnahme der Flansche 11 an einer Texturiermaschine stattfinden.

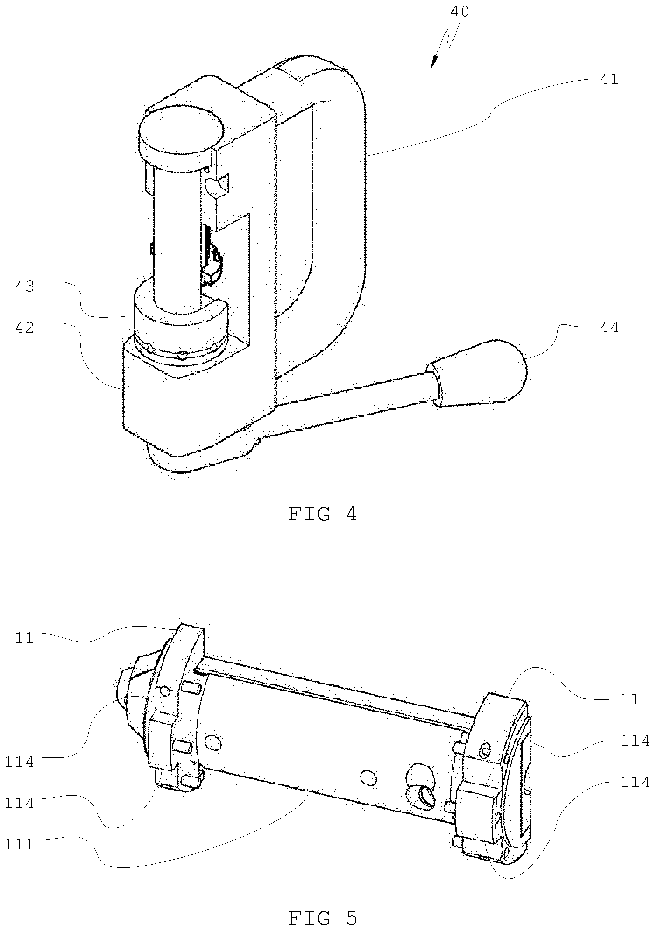

Figur 3 zeigt ein Detail einer Texturiermaschine mit drei Aufnahmen 71 zum Aufnehmen von Düsen 10 zum Stauchkräuseln. Zur besseren Übersicht ist jedoch nur eine Aufnahme 71 und die zugehörigen Bauteile zu dieser Aufnahme 71 bezeichnet. In der Aufnahme 71 ist eine Aufnahmekontur 711 gezeigt. Die Texturiermaschine weist vorliegend drei Aufnahmen 71 auf. In der mittleren Aufnahme ist eine erste Hälfte einer bereits eingesetzten Düse gezeigt. In der linken Aufnahme 71 ist ein Setzelement 40 zum Einsetzen oder Entfernen einer Düse 10 gezeigt. Das Setzelement 40 weist einen Griff 41 und ein Betätigungselement 44 auf. Die Texturiermaschine weist im oberen Bereich der Aufnahmen 71 eine Arretiervorrichtung 30 auf. Die Arretiervorrichtung 30 umfasst einen Arretierungsträger 31 und drei Arretierungselemente 32. Zur besseren Übersicht ist jeweils nur eines der Elemente bezeichnet. Das Arretierungselement 32 ist im Arretierungsträger 31 mit einem Abdeckelement 323 gehalten. Das Abdeckelement 323 ist vorliegend durchsichtig dargestellt, sodass innerhalb des Arretierungsträgers 31 zwei Federn 322 erkennbar sind, welche eine Kraft auf das Arretierungselement 32 ausüben. Das Abdeckelement 323 ist mit Schrauben 324 am Arretierungsträger 31 befestigt. Das Arretierungselement 32 weist eine Ausnehmung 321 zur Aufnahme eines entsprechenden Elementes der Düse 10 auf. Sobald das Setzelement 40 in Kontakt mit der Aufnahme 71 gebracht wird, wird das Arretierungselement 32 entgegen der Federkraft der Federn 323 bewegt. Das Arretierungselement 32 gibt somit die Aufnahmekontur 711 frei, in die die Düse 10 eingesetzt werden kann. Die Düse 10 wird dadurch eingesetzt, dass das Betätigungselement 44 des Setzelementes 40 bewegt wird. Die Halterung 43 dreht sich damit im Aufnahmeelement 42. Mit der Halterung 43 dreht sich eine in der Halterung 43 aufgenommene Düse 10 so, dass die Führungselemente 115 (siehe Figur 1 und 2) in die dafür vorgesehene Aufnahmekontur 711 gedreht wird. Mit Entfernen des Setzelementes 40 wird das Arretierungselement 32 freigegeben. Das Arretierungselement 32 greift mit seiner Ausnehmung 321 in die Arretierungsstruktur 114 (siehe Figur 5) der Düse 10 ein. Die Düse 10 ist damit in der Aufnahme 71 mit der Arretierungsvorrichtung 30 gehalten.

Figur 4 zeigt ein Setzelement in einer perspektivischen Ansicht, wobei die drehbare Halterung 43 im Aufnahmeelement 42 sichtbar ist. Die Halterung weist an ihrem in der Figur 4 unteren Bereich zylinderförmige Ausnehmungen auf, in die eine federnd gelagerte Kugel als Arretierungselement eingreift. Die Ausnehmungen sind mittels einer Nut miteinander verbunden. Dies ermöglicht es dem Bediener beispielsweise durch haptisches Feedback festzustellen, wann die Halterung in einer vordefinierten Position ist. Der Griff 41 des Setzelementes 40 besteht aus Kunststoff und ist mit dem Aufnahmeelement 42 verschraubt. Im unteren Bereich des Setzelementes 40 befindet sich ein Betätigungselement 44.

Figur 5 zeigt eine weitere Ansicht des Formteils 12 mit dem Gehäuse 111 und den Flanschen 11 in einer Rückansicht. An den Flanschen 11 ist eine Arretierungsstruktur 114 gezeigt, welche vorliegend im Wesentlichen aus zwei sich gegenüberliegenden Planflächen besteht. Diese sind derart gefertigt, dass sie mit einem Arretierungselement 32 einer Arretiervorrichtung 30 (siehe Figur 3) zusammenwirken.

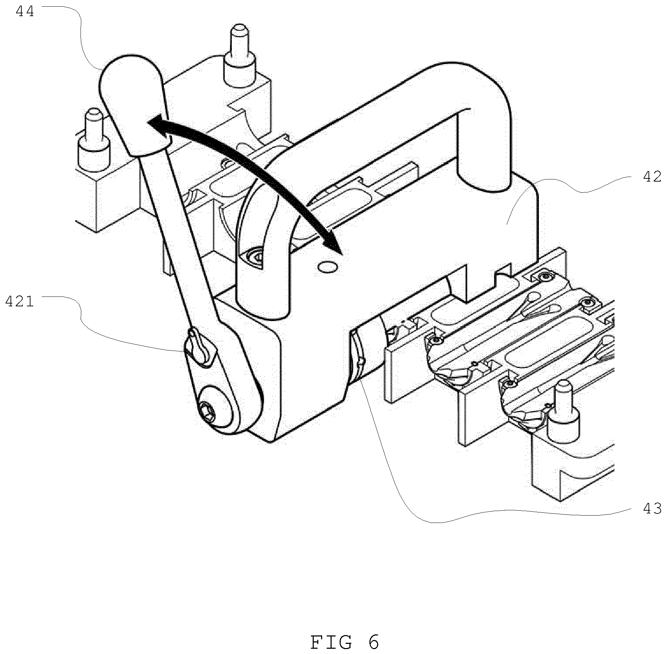

Figur 6 zeigt ein weiteres Detail eines Setzelementes 40 während der Entnahme einer Austauschdüse aus einer Aufbewahrungsvorrichtung. Deutlich sichtbar ist hierbei das Betätigungselement 44. Das Betätigungselement ist vorliegend als Ratsche ausgebildet, wobei am Betätigungselement 44 ein Umschaltelement 421 sichtbar ist. Durch bewegen des Umschaltelementes 421 wird es ermöglicht, das Betätigungselement 44 mit der Halterung 43 zusammen in einer vorbestimmten Richtung zu drehen und in die entgegengesetzte Richtung zu sperren..

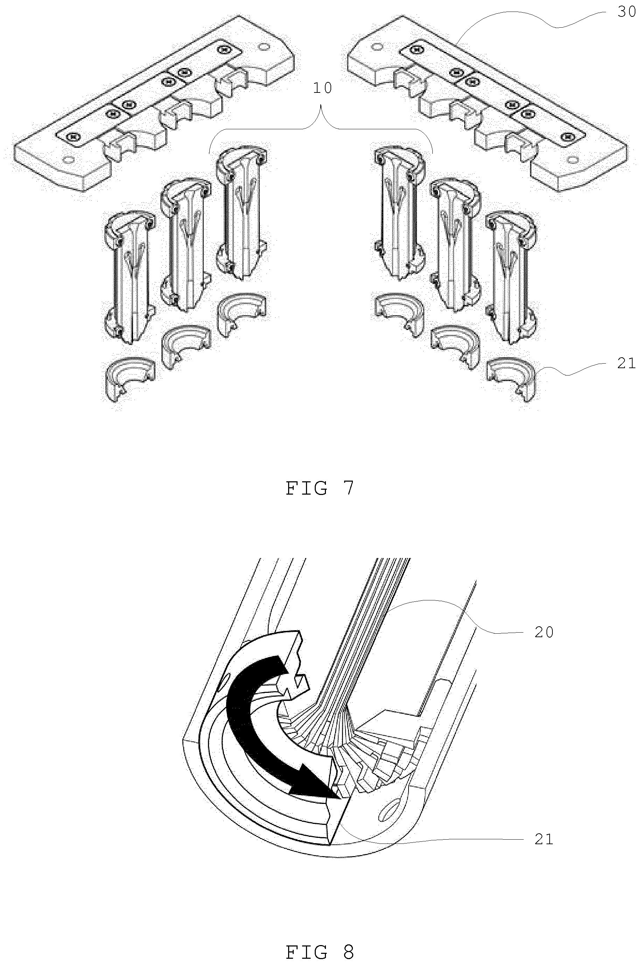

Figur 7 zeigt einen Aufrüstkit zum Aufrüsten einer Texturiermaschine. Der Aufrüstkit umfasst ein Düse 10 umfassend zwei Hälften, wobei jede Hälfte ein Formteil 12 und mehrere Flansche 11 umfasst. Zum Aufrüstkit gehört ebenfalls ein oder mehrere Einlaufelemente 21. Vorzugsweise ist der Aufrüstkit wie vorliegend aus zwei Arretiervorrichtungen 30, drei Düsen 10 und sechs Einlaufelementen 21 gebildet.

Figur 8 zeigt das Detail einer Stauchkammer 20, welche an ihrem Ende ein Einlaufelement 21 aufweist. Das Einlaufelement 21 kann wie auf dem Bild in der Figur 8 gezeigt durch eine Drehbewegung auf den Lamellen der Stauchkammer 20 befestigt werden.

## Patentansprüche

1. Formteil (12) für einen Düsenkern (60) zum Stauchkräuseln von Fäden, vorzugsweise synthetischen multifilen Fäden, umfassend:
einen Keramikkörper (121) mit einer Planfläche (122), wobei in der Planfläche (122) eine vorzugsweise zentrale Aussparung (123) zur Bildung eines Teils eines Düsenkanals und vorzugsweise zur Bildung eines halben Düsenkanals angeordnet ist,
wobei in der Planfläche (122) Aufnahmekonturen (124) zur Aufnahme von Befestigungsmitteln (50) angeordnet sind, welche Aufnahmekonturen (124) lateral in Bezug auf die Aussparung (123) angeordnet sind,
**dadurch gekennzeichnet, dass**
die Aufnahmekonturen (124) in lateraler Richtung offen sind.

2. Formteil (12) nach Anspruch 1, **dadurch gekennzeichnet, dass** innerhalb der Aufnahmekontur (124) eine zur Planfläche (123) parallel versetzte Anschlagfläche (1241) angeordnet ist.

3. Formteil (12) nach einem der Ansprüche 1 oder 2, wobei die Planflächen (122) keine Ausnehmungen oder Durchgänge für Befestigungsmittel (50) umfasst, welche sich vollumfänglich in der Planfläche (122) befinden.

4. Formteil (12) nach einem der Ansprüche 1 bis 3, **dadurch gekennzeichnet, dass** das Formteil (12) eine Verlängerung als Teil einer Nase (13) aufweist, welche Nase (13) in einer Fadenbewegungsrichtung (F) aus einem ersten Konus (131) und einem zweiten Konus (132) gebildet ist, wobei der erste Konus (131) an einem Querschnitt der Nase (13) eine grössere Basis aufweist als der zweite Konus (132) am selben Querschnitt der Nase (13).

5. Formteil (12) nach einem der Ansprüche 1 bis 4, wobei das Formteil (12) einen Eintrittsbereich (125) und einen Austrittsbereich (126) aufweist, **dadurch gekennzeichnet, dass** die Aufnahmekonturen (124) in diesen Bereichen (125, 126) angeordnet sind.

6. Formteil (12) nach einem der Ansprüche 1 bis 5, wobei Begrenzungsflächen (1242) zum Verhindern einer Bewegung des Formteils (12) entlang einer Fadenbewegungsrichtung (F) zumindest an einer Aufnahmekontur (124) angeordnet sind oder Begrenzungskonturen (1243) an einer Flanschschnittstelle (112) angeordnet sind, wobei die Begrenzungsflächen (1242) oder Begrenzungskonturen (1243) vorzugsweise im Wesentlichen rechtwinklig zur Fadenbewegungsrichtung (F) angeordnet sind.

7. Formteil (12) nach einem der Ansprüche 1 bis 6, **dadurch gekennzeichnet, dass** die Aussparung (123) in Fadenbewegungsrichtung (F) nacheinander angeordnet zumindest einen ersten Bereich (127) und einen zweiten Bereich (128) aufweist, wobei der zweite Bereich (128) eine grössere Querschnittsfläche als der erste Bereich (127) aufweist.

8. Formteil (12) nach einem der Ansprüche 1 bis 7, wobei ein Fluideinlass (129) zumindest teilweise entlang der Aussparung (123) angeordnet ist und mit einer Mündung in diese mündet.

9. Formteil (12) nach Anspruch 8, **dadurch gekennzeichnet, dass** sich die Mündung des Fluideinlasses (129) zwischen einer ersten und einer zweiten Anordnung aus Aufnahmekonturen (124) befindet.

10. Düsenkern (60) umfassend mindestens zwei Formteile (12) nach einem der Ansprüche 1 bis 9, wobei die Formteile vorzugsweise (12) zueinander baugleich ausgebildet sind und die jeweiligen Aussparungen (123) einen Düsenkanal mit Einlass und Auslass bilden.

11. Düse (10) zum Stauchkräuseln von Fäden, vorzugsweise synthetischen multifilen Fäden, mit einem Düsenkern (60), vorzugsweise einem Düsenkern (60) nach Anspruch 10,
wobei die Düse (10)
- mindestens zwei Formteile (12) beinhaltet, vorzugsweise zwei Formteile (12) nach einem der Ansprüche 1 bis 9, welche je zwei laterale Seiten aufweisen, die sich im Wesentlichen in einer Förderrichtung (F) der Fäden erstrecken, und je eine Planfläche (122) aufweisen, welche sich zwischen den lateralen Seiten befindet, wobei die Planflächen (122) je mindestens eine Aussparung (123) zur Bildung eines Düsenkanals aufweisen,
- zumindest teilweise aus metallischem Material, vorzugsweise Stahl, gefertigte Flansche (11) aufweist, **dadurch gekennzeichnet, dass**
- die Formteile (12) an ihren lateralen Seiten eine Aufnahmekontur (124) zur Aufnahme von Befestigungsmitteln (50) aufweisen, wobei die Formteile (12) mit Befestigungsmitteln (50) an je mindestens zwei Flanschen (11) befestigt oder befestigbar sind.

12. Düse (10) nach Anspruch 11, wobei die Flansche (11) aus Abschnitten eines Ringes gebildet sind.

13. Düse (10) nach Anspruch 11 oder 12, wobei die Düse (10) mindestens zwei zumindest teilweise aus metallischem Material, vorzugsweise Stahl, bestehende Gehäuse (111) umfasst, wobei je ein Gehäuse (111) vorzugsweise einstückig mit je mindestens zwei Flanschen (11) ausgebildet ist, wobei die mindestens zwei Formteile (12) zumindest teilweise von je einem metallischen Gehäuse (111) umgeben sind.

14. Düse (10) nach Anspruch 13, wobei zwischen dem Formteil 12 und dem Gehäuse ein elastisches Element, vorzugsweise eine selbstklebende Dichtung (14), angeordnet ist.

15. Düse (10) nach einem der Ansprüche 11 bis 14, wobei die Düse (10) Befestigungsmittel in der Form von Schrauben (50a) und/oder Stiften (50b) aufweist.

16. Düse (10) nach einem der Ansprüche 11 bis 15, wobei zumindest einer der Flansche (11) je Formteil (12) Gleitflächen (113) aufweist, welche derart ausgebildet sind, dass eine Ausdehnung des jeweiligen Formteils (12) in Förderrichtung (F) der Fäden ermöglicht ist und/oder ein Verschieben des Formteils (12) in lateraler Richtung verhindert oder verhinderbar ist.

17. Düse (10), vorzugsweise nach einem der Ansprüche 10 bis 16, zum Stauchkräuseln von Fäden, vorzugsweise synthetischen multifilen Fäden, mit einem Düsenkern (60), vorzugsweise einem Düsenkern (60) nach Anspruch 10,
wobei die Düse (10)
- mindestens zwei Formteile (12) beinhaltet, vorzugsweise zwei Formteile (12) nach einem der Ansprüche 1 bis 9, welche je eine Planfläche (122) aufweisen, wobei die Planflächen (122) je mindestens eine Aussparung (123) zur Bildung eines Düsenkanals aufweisen,
- zumindest teilweise aus metallischem Material, vorzugsweise Stahl, gefertigte Flansche (11) aufweist, welche mit jeweils einem Formteil (12) des Düsenkerns (60) verbunden sind, **dadurch gekennzeichnet, dass**
mindestens ein Flansch (11), vorzugsweise jeder Flansch (11), jedes Formteils (12) mindestens eine nicht rotationssymmetrische Arretierungsstruktur (114) aufweist, welche zur Rotationsarretierung in einer Arretierungsvorrichtung (30) ausgebildet ist.

18. Düse (10) nach einem der Ansprüche 11 bis 17, wobei die mindestens zwei Formteile (12) zueinander baugleich ausgebildet sind und die Aussparungen (123) einen Düsenkanal mit Einlass und Auslass bilden.

19. Düse (10) nach einem der Ansprüche 11 bis 18, wobei mindestens ein Flansch (11) jedes Formteils (12), vorzugsweise jeder Flansch (11) ein Führungselement (115) zur Führung in einer Aufnahmekontur (711) einer Aufnahme (71) einer Texturiermaschine zur Einsetzung der Düse (10) aufweist.

20. Düse (10) nach einem der Ansprüche 11 bis 19, wobei der Düsenkern an einem Austritt der Fäden eine Nase aufweist, wobei die Nase max. 12mm, vorzugsweise 10 mm und besonders bevorzugt max. 7.5 mm lang ist.

21. Stauchkräuselvorrichtung (1) zum Stauchkräuseln von Fäden, vorzugsweise synthetischen multifilen Fäden, wobei die Stauchkräuselvorrichtung (1) umfasst:
eine Düse (10) nach einem der Ansprüche 11 bis 20 und eine Stauchkammer (20), welche in Fadenbewegungsrichtung (F) der Düse (10) nachgeordnet ist.

22. Aufrüstkit zum Aufrüsten einer Texturiermaschine umfassend zumindest ein Formteil (12) nach einem der Ansprüche 1 bis 8 oder eine Düse (10) nach einem der Ansprüche 10 bis 21 und ein Einlaufelement (21) für eine Stauchkammer (20), wobei das Einlaufelement (21) einen Aufnahmebereich für eine Nase (13) eines Düsenkerns (60) aufweist, welche Nase (13) in einer Fadenbewegungsrichtung (F) aus einem ersten Konus (131) und einem zweiten Konus (132) gebildet ist, wobei der erste Konus (131) an einem Querschnitt der Nase (13) eine grössere Basis aufweist als der zweite Konus (132) am selben Querschnitt der Nase (13).

23. Arretierungsvorrichtung (30) zur Arretierung von einer oder mehreren Düsen (10) zum Stauchkräuseln, vorzugsweise Düsen (10) nach einem der Ansprüche 17-20, für einen Stauchkräuselbetrieb, wobei die Arretierungsvorrichtung (30) umfasst
mindestens einen Arretierungsträger (31)
mindestens ein, vorzugsweise mehrere, Arretierungselemente (32), wobei
die Arretierungselemente (32) mindestens eine Ausnehmung (321) zur Aufnahme einer Arretierungsstruktur (114) einer Düse (10) aufweisen, wobei
die Arretierungselemente (32) beweglich auf dem Arretierungsträger (31) befestigt oder befestigbar sind, wobei die Arretierungselemente (32) derart angeordnet oder anordnungsbar sind, dass eine gerichtete Kraft auf die Arretierungselemente (32) in Richtung einer in die Ausnehmung (321) eingesetzten Düse (10) wirkt.

24. Arretierungsvorrichtung (30) nach Anspruch 24, wobei die gerichtete Kraft durch mindestens eine, vorzugsweise zwei oder mehr, Federn (322) bereitgestellt wird.

25. Arretierungsvorrichtung (30) nach einem der Ansprüche 24 oder 25, wobei die Arretierungselemente (32) lösbar, insbesondere mit einem Abdeckelement (324) und Schrauben (325) am Arretierungsträger (31), befestigt oder befestigbar ist.

26. Arretierungsvorrichtung (30) nach einem der Ansprüche 23 bis 25, wobei der Arretierungsträger (31) zumindest teilweise aus Kunststoff, vorzugsweise aus glasfaserverstärktem Epoxid, gefertigt ist.

27. Arretierungsvorrichtung (30) nach einem der Ansprüche 23 bis 26, wobei die Arretierungselemente (32) zumindest teilweise aus Metall, vorzugsweise Stahl, gefertigt sind.

28. Setzelement (40) zur Aufnahme von Düsen (10) zum Stauchkräuseln, vorzugsweise Düsen (10) nach einem der Ansprüche 10 bis 21, wobei das Setzelement (40) umfasst,
mindestens einen Griff (41) und
ein Aufnahmeelement (42) und
eine Halterung (43), welche drehbar in dem Aufnahmeelement (42) gelagert ist sowie
ein Betätigungselement (44), zur Drehung der Halterung (43)
wobei die Halterung (43) zwischen einer Haltestellung zur Haltung der Düse (10) in dem Aufnahmeelement (42) und einer Freigabestellung zur Aufnahme und Abgabe der Düse (10) bewegbar ist.

29. Setzelement (40) nach Anspruch 28, wobei die Halterung (43) als in Umfangsrichtung offener, vorzugsweise über ungefähr die Hälfte des Umfangs offener Zylinder ausgebildet ist.

30. Setzelement (40) nach Anspruch 28 oder 29, wobei das Aufnahmeelement (42) eine Aufnahmearretierung (421) zur Arretierung des Betätigungselements (44) aufweist.

31. Setzelement (40) nach Anspruch 30, wobei die Aufnahmearretierung (421) als Stift ausgebildet ist, welcher in eine Verschlussstellung und Offenstellung bringbar ist, wobei der Stift in der Verschlussstellung eine Drehbewegung des Betätigungselements (44) verhindert.

32. Verfahren zur Herstellung von stauchgekräuselten Fäden, insbesondere synthetischen multifilen Fäden, wobei die Fäden mit Hilfe eines Formteils (12) nach einem der Ansprüche 1 bis 8, einem Düsenkern (60) nach Anspruch 9 oder einer Düse (10) nach einem der Ansprüche 10 bis 21 gestauchkräuselt werden.

## Claims

1. Molded part (12) for a nozzle core (60) for stuffer-box crimping of threads, preferably synthetic multifilament threads, comprising:
a ceramic body (121) with a planar surface (122),
wherein a preferably central cavity (123) is arranged in the planar surface (122) for forming part of a nozzle duct and preferably for forming half of a nozzle duct,
wherein receiving contours (124) are arranged in the planar surface (122) for receiving attaching means (50), which receiving contours (124) are arranged laterally with reference to the cavity (123),
**characterized in that** the receiving contours (124) are open in the lateral direction.

2. Molded part (12) according to Claim 1, **characterized in that** a stop face (1241), which is offset parallel to the planar surface (123), is arranged inside the receiving contour (124).

3. Molded part (12) according to one of Claims 1 or 2, wherein the planar surface (122) does not include any recesses or passages for attaching means (50) which are situated completely in the planar surface (122).

4. Molded part (12) according to one of Claims 1 to 3, **characterized in that** the molded part (12) comprises an extension as part of a nose (13), which nose (13) is formed by a first cone (131) and a second cone (132) in a direction of movement (F) of the thread, wherein the first cone (131) comprises a larger base on a cross section of the nose (13) than the second cone (132) on the same cross section of the nose (13).

5. Molded part (12) according to one of Claims 1 to 4, wherein the molded part (12) comprises an inlet region (125) and an outlet region (126), **characterized in that** the receiving contours (124) are arranged in said regions (125, 126).

6. Molded part (12) according to one of Claims 1 to 5, wherein delimiting faces (1242) to prevent a movement of the molded part (12) along a direction of movement of the thread (F) are arranged on at least one receiving contour (124) or delimiting contours (1243) are arranged on a flange interface (112), wherein the delimiting faces (1242) or delimiting contours (1243) are preferably arranged substantially perpendicularly to the direction of movement of the thread (F).

7. Molded part (12) according to one of Claims 1 to 6, **characterized in that** the cavity (123) comprises at least one first region (127) and one second region (128) arranged one after the other in the direction of movement (F) of the thread, wherein the second region (128) has a greater cross-sectional area than the first region (127).

8. Molded part (12) according to one of Claims 1 to 7, wherein a fluid inlet (129) is arranged at least in part along the cavity (123) and opens by way of a mouth into said cavity.

9. Molded part (12) according to Claim 8, **characterized in that** the mouth of the fluid inlet (129) is situated between a first and a second arrangement of receiving contours (124).

10. Nozzle core (60) comprising at least two molded parts (12) according to one of Claims 1 to 9, wherein the molded parts (12) are preferably realized in a structurally identical manner to one another and the respective cavities (123) form a nozzle duct with inlet and outlet.

11. Nozzle (10) for stuffer-box crimping of threads, preferably synthetic multifilament threads, having a nozzle core (60), preferably a nozzle core (60) according to Claim 10,
wherein the nozzle (10)
- includes at least two molded parts (12), preferably two molded parts (12) according to one of Claims 1 to 9, which comprise two lateral sides each, which extend substantially in a conveying direction (F) of the threads, and comprise a planar surface (122) each, which is situated between the lateral sides, wherein the planar surfaces (122) comprise at least one cavity (123) each for forming a nozzle duct,
- comprises flanges (11) which are produced at least in part from metallic material, preferably steel,
**characterized in that**
- the molded parts (12) comprise, on their lateral sides, a receiving contour (124) for receiving attaching means (50), wherein the molded parts (12) are attached or are attachable by way of attaching means (50) on at least two flanges (11) each.

12. Nozzle (10) according to Claim 11, wherein the flanges (11) are formed from portions of a ring.

13. Nozzle (10) according to Claim 11 or 12, wherein the nozzle (10) includes at least two housings (111) which consist at least in part of metallic material, preferably steel, wherein each housing (111) is preferably realized in an integral manner with at least two flanges (11) each, wherein the at least two molded parts (12) are surrounded at least in part by one metallic housing (111) each.

14. Nozzle (10) according to Claim 13, wherein an elastic element, preferably a self-adhesive seal (14), is arranged between the molded part (12) and the housing.

15. Nozzle (10) according to one of Claims 11 to 14, wherein the nozzle (10) comprises attaching means in the form of screws (50a) and/or pins (50b).

16. Nozzle (10) according to one of Claims 11 to 15, wherein at least one of the flanges (11) per molded part (12) comprises sliding faces (113) which are realized in such a manner that expansion of the respective molded part (12) in the conveying direction (F) of the threads is made possible and/or a displacement of the molded part (12) in the lateral direction is prevented or is preventable.

17. Nozzle (10), preferably according to one of Claims 10 to 16, for stuffer-box crimping of threads, preferably synthetic multifilament threads, having a nozzle core (60), preferably a nozzle core (60) according to claim 10, wherein the nozzle (10)
- includes at least two molded parts (12), preferably two molded parts (12) according to one of Claims 1 to 9, which comprise one planar surface (122) each, wherein the planar surfaces (122) comprise at least one cavity (123) each for forming a nozzle duct, wherein (said nozzle)
- comprises flanges (11) which are produced at least in part from metallic material, preferably steel, and are each connected to a molded part (12) of the nozzle core (60), **characterized in that** at least one flange (11), preferably each flange (11), of each molded part (12) comprises at least one non rotationally symmetrical locking structure (114) which is realized in a locking device (30) as a rotational locking mechanism.

18. Nozzle (10) according to one of Claims 11 to 17, wherein the at least two molded parts (12) are realized in a structurally identical manner to one another and the cavities (123) form a nozzle duct with inlet and outlet.

19. Nozzle (10) according to one of Claims 11 to 18, wherein at least one flange (11) of each molded part (12), preferably each flange (11) comprises a guide element (115) for guiding in a receiving contour (711) of a reception (71) of a texturing machine for inserting the nozzle (10).

20. Nozzle (10) according to one of Claims 11 to 19, wherein the nozzle core comprises a nose at an outlet of the threads, wherein the nose is no more than 12 mm, preferably 10 and particularly preferred no more than 7.5 mm in length.

21. Stuffer-box crimping device (1) for stuffer-box crimping of threads, preferably synthetic multifilament threads, wherein the stuffer-box crimping device (1) includes:
a nozzle (10) according to one of Claims 11 to 20 and a stuffer box (20) which is arranged downstream of the nozzle (10) in the direction of movement (F) of the thread.

22. Expansion kit for expanding a texturing machine comprising at least one molded part (12) according to one of Claims 1 to 8 or a nozzle (10) according to one of Claims 10 to 21 and an inlet element (21) for a stuffer box (20), wherein the inlet element (21) comprises a receiving region for a nose (13) of a nozzle core (60), which nose (13) is formed by a first cone (131) and a second cone (132) in a direction of movement of the thread (F), wherein the first cone (131) has a larger base on a cross section of the nose (13) than the second cone (132) on the same cross section of the nose (13).

23. Locking device (30) for locking one or multiple nozzles (10) for stuffer-box crimping, preferably nozzles (10) according to one of Claims 17-20, for a stuffer-box crimping operation, wherein the locking device (30) comprises
at least one locking carrier (31)
at least one, preferably multiple, locking elements (32), wherein
the locking elements (32) comprise at least one recess (321) for receiving a locking structure (114) of a nozzle (10), wherein
the locking elements (32) are attached or are attachable in a movable manner on the locking carrier (31), wherein
the locking elements (32) are arranged or are arrangeable in such a manner that a directed force acts on the locking elements (32) in the direction of a nozzle (10) inserted into the recess (321).

24. Locking device (30) according to Claim 24, wherein the directed force is provided by at least one, preferably two or more, springs (322).

25. Locking device (30) according to one of Claims 24 or 25, wherein the locking elements (32) are attached or are attachable in a releasable manner, in particular by way of a cover element (324) and screws (325), on the locking carrier (31).

26. Locking device (30) according to one of Claims 23 to 25, wherein the locking carrier (31) is produced at least in part from plastic, preferably from glass-fiber reinforced epoxy.

27. Locking device (30) according to one of Claims 23 to 26, wherein the locking elements (32) are produced at least in part from metal, preferably steel.

28. Setting element (40) for receiving nozzles (10) for stuffer-box crimping, preferably nozzles (10) according to one of Claims 10 to 21, wherein the setting element (40) includes,
at least one handle (41) and
a receiving element (42) and
a holder (43) which is mounted rotatably in the receiving element (42) and
an actuating element (44), for rotating the holder (43),
wherein the holder (43) is movable between a hold position for holding the nozzle (10) in the receiving element (42) and a release position for receiving and discharging the nozzle (10) .

29. Setting element (40) according to Claim 28, wherein the holder (43) is realized as a cylinder which is open in the circumferential direction, preferably which is open over approximately half of the circumference.

30. Setting element (40) according to Claim 28 or 29, wherein the receiving element (42) comprises a receiving lock (421) for locking the actuating element (44) .

31. Setting element (40) according to Claim 30, wherein the receiving lock (421) is realized as a pin which is movable into a closed position and an open position, wherein, in the closed position, the pin prevents a rotational movement of the actuating element (44) .

32. Method for producing stuffer-box crimped threads, in particular synthetic multifilament threads, wherein the threads are stuffer-box crimped by means of a molded part (12) according to one of Claims 1 to 8, a nozzle core (60) according to Claim 9 or a nozzle (10) according to one of Claims 10 to 21.

## Revendications

1. Pièce façonnée (12) pour un noyau de filière (60) pour le frisage par refoulement de fils, de préférence de fils multifilaments synthétiques, comprenant :
un corps en céramique (121) ayant une surface plane (122), un évidement (123) de préférence central étant réalisé dans la surface plane (122) pour former une partie d'un canal de filière et de préférence pour former un demi-canal de filière, des contours de réception (124) étant disposés dans la surface plane (122) pour recevoir des moyens d'attachement (50), lesquels contours de réception (124) sont disposés latéralement par rapport à l'évidement (123),
**caractérisée en ce que**
les contours de réception (124) sont ouverts dans la direction latérale.

2. Pièce façonnée (12) selon la revendication 1, **caractérisée en ce qu'**une surface de butée (1241) décalée parallèlement à la surface plane (123) est disposée à l'intérieur du contour de réception (124) .

3. Pièce façonnée (12) selon l'une quelconque des revendications 1 ou 2, dans laquelle les surfaces planes (122) ne comprennent aucune cavité ou passage pour des moyens d'attachement (50) se trouvant entièrement sur la périphérie dans la surface plane (122).

4. Pièce façonnée (12) selon l'une quelconque des revendications 1 à 3, **caractérisée en ce que** la pièce façonnée (12) présente un prolongement en tant que partie d'un nez (13), lequel nez (13) est formé dans une direction de déplacement (F) du fil à partir d'un premier cône (131) et d'un deuxième cône (132), le premier cône (131) présentant au niveau d'une section transversale de l'nez (13) une plus grande base que le deuxième cône (132) au niveau de la même section transversale de l'nez (13) .

5. Pièce façonnée (12) selon l'une quelconque des revendications 1 à 4, la pièce façonnée (12) présentant une région d'entrée (125) et une région de sortie (126), **caractérisée en ce que** les contours de réception (124) sont disposés dans ces régions (125, 126).

6. Pièce façonnée (12) selon l'une quelconque des revendications 1 à 5, dans laquelle des surfaces de limitation (1242) pour empêcher un déplacement de la pièce façonnée (12) le long d'une direction de déplacement (9) du fil sont disposées au moins sur un contour de réception (124) ou des contours de limitation (1243) sont disposés au niveau d'une interface de bride (112), les surfaces de limitation (1242) ou les contours de limitation (1243) étant de préférence disposés essentiellement à angle droit par rapport à la direction de déplacement (F) du fil.

7. Pièce façonnée (12) selon l'une quelconque des revendications 1 à 6, **caractérisée en ce que** l'évidement (123) présente, dans la direction de déplacement (F) du fil, au moins une première région (127) et une deuxième région (128) disposées l'une derrière l'autre, la deuxième région (128) présentant une plus grande surface en section transversale que la première région (127).

8. Pièce façonnée (12) selon l'une quelconque des revendications 1 à 7, dans laquelle une entrée de fluide (129) est disposée au moins en partie le long de l'évidement (123), et débouche avec une embouchure dans celui-ci.

9. Pièce façonnée (12) selon la revendication 8, **caractérisée en ce que** l'embouchure de l'entrée de fluide (129) se trouve entre un premier et un deuxième agencement de contours de réception (124) .

10. Noyau de filière (60) comprenant au moins deux pièces façonnées (12) selon l'une quelconque des revendications 1 à 9, les pièces façonnées (12) étant de préférence réalisées avec une construction identique et les évidements (123) respectifs formant un canal de filière avec une entrée et une sortie.

11. Filière (10) pour le frisage par refoulement de fils, de préférence de fils multifilaments synthétiques, comprenant un noyau de filière (60), de préférence un noyau de filière (60) selon la revendication 10, la filière (10)
- comprenant au moins deux pièces façonnées (12), de préférence deux pièces façonnées (12) selon l'une quelconque des revendications 1 à 9, qui présentent chacune deux côtés latéraux qui s'étendent essentiellement dans une direction de transport (F) des fils et qui présentent chacune une surface plane (122) qui se trouve entre les côtés latéraux, les surfaces planes (122) présentant chacune au moins un évidement (123) pour former un canal de filière,
- présentant des brides (11) fabriquées au moins en partie en matériau métallique, de préférence en acier,
**caractérisée en ce que**
les pièces façonnées (12) présentent, au niveau de leurs côtés latéraux, un contour de réception (124) pour recevoir des moyens d'attachement(50), les pièces façonnées (12) étant attachées ou pouvant être attachées avec des moyens d'attachement (50) à au moins deux brides respectivement (11).

12. Filière (10) selon la revendication 11, dans laquelle les brides (11) sont formées de portions d'un anneau.

13. Filière (10) selon la revendication 11 ou 12, dans laquelle la filière (10) comprend au moins deux boîtiers (111) constitués au moins en partie de matériau métallique, de préférence d'acier, un boîtier (111) étant de préférence réalisé à chaque fois d'une seule pièce avec au moins deux brides respectives (11), les au moins deux pièces façonnées (12) étant entourées au moins en partie par un boîtier métallique respectif (111).

14. Filière (10) selon la revendication 13, dans laquelle un élément élastique, de préférence un joint d'étanchéité auto-adhésif (14), est disposé entre la pièce façonnée (12) et le boîtier.

15. Filière (10) selon l'une quelconque des revendications 11 à 14, la filière (10) présentant des moyens d'attachement sous forme de vis (50a) et/ou de broches (50b).

16. Filière (10) selon l'une quelconque des revendications 11 à 15, dans laquelle au moins l'une des brides (11) de chaque pièce façonnée (12) présente des surfaces de glissement (113) qui sont réalisées de telle sorte qu'un allongement de la pièce façonnée (12) respective dans la direction de transport (F) des fils soit possible et/ou de telle sorte qu'un déplacement de la pièce façonnée (12) dans la direction latérale soit empêché ou puisse être empêché.

17. Filière (10), de préférence selon l'une quelconque des revendications 10 à 16, pour le frisage par refoulement de fils, de préférence de fils multifilaments synthétiques, comprenant un noyau de filière (60), de préférence un noyau de filière (60) selon la revendication 10, la filière (10)
- comprenant au moins deux pièces façonnées (12), de préférence deux pièces façonnées (12) selon l'une quelconque des revendications 1 à 9, qui présentent chacune une surface plane (122), les surfaces planes (122) présentant à chaque fois au moins un évidement (123) pour former un canal de filière,
- présentant des brides (11) fabriquées au moins en partie en matériau métallique, de préférence en acier, qui sont connectées à une pièce façonnée (12) respective du noyau de filière (60),
**caractérisée en ce**
**qu'**au moins une bride (11), de préférence chaque bride (11), de chaque pièce façonnée (12), présente au moins une structure de blocage (114) sans symétrie de révolution qui est réalisée pour bloquer la rotation dans un dispositif de blocage (30) .

18. Filière (10) selon l'une quelconque des revendications 11 à 17, dans laquelle les au moins deux pièces façonnées (12) sont réalisées avec une construction identique et les évidements (123) forment un canal de filière avec entrée et sortie.

19. Filière (10) selon l'une quelconque des revendications 11 à 18, dans laquelle au moins une bride (11) de chaque pièce façonnée (12), de préférence chaque bride (11), présente un élément de guidage (115) pour le guidage dans un contour de réception (711) d'un logement (71) d'une machine de texturation pour l'insertion de la filière (10).

20. Filière (10) selon l'une quelconque des revendications 11 à 19, dans laquelle le noyau de filière présente, au niveau d'une sortie des fils, un nez, l'nez mesurant au maximum 12 mm, de préférence 10 mm, et particulièrement préférablement au maximum 7,5 mm de long.

21. Dispositif de frisage par refoulement (1) pour le frisage par refoulement de fils, de préférence de fils multifilaments synthétiques, le dispositif de frisage par refoulement (1) comprenant :
une filière (10) selon l'une quelconque des revendications 11 à 20 et une chambre de refoulement (20) qui est disposée dans la direction de déplacement (F) du fil après la filière (10).

22. Kit d'équipement pour l'équipement d'une machine de texturation comprenant au moins une pièce façonnée (12) selon l'une quelconque des revendications 1 à 8 ou une filière (10) selon l'une quelconque des revendications 10 à 21 et un élément d'alimentation (21) pour une chambre de refoulement (20), l'élément d'alimentation (21) présentant une région de réception pour un nez (13) d'un noyau de filière (60), lequel nez (13) est formé dans une direction de déplacement (F) du fil à partir d'un premier cône (131) et d'un deuxième cône (132), le premier cône (131) présentant au niveau d'une section transversale de l'nez (13) une plus grande base que le deuxième cône (132) au niveau de la même section transversale de l'nez (13).

23. Dispositif de blocage (30) pour le blocage d'une ou plusieurs filières (10) pour le frisage par refoulement, de préférence de filières (10) selon l'une quelconque des revendications 17 à 20, pour un mode de frisage par refoulement, le dispositif de blocage (30) comprenant
au moins un support de blocage (31),
au moins un, de préférence plusieurs, éléments de blocage (32),
les éléments de blocage (32) présentant au moins un évidement (321) pour recevoir une structure de blocage (114) d'une filière (10),
les éléments de blocage (32) étant attachés ou pouvant être attachés de manière déplaçable sur le support de blocage (31),
les éléments de blocage (32) étant disposés ou pouvant être disposés de telle sorte qu'une force orientée vers les éléments de blocage (32) agisse dans la direction d'une filière (10) insérée dans l'évidement (321).

24. Dispositif de blocage (30) selon la revendication 24, la force orientée étant fournie par au moins un, de préférence deux ou plus de deux, ressorts (322) .

25. Dispositif de blocage (30) selon l'une quelconque des revendications 24 ou 25, les éléments de blocage (32) étant attachés ou pouvant être attachés de manière amovible, en particulier avec un élément de recouvrement (324) et des vis (325), au support de blocage (31).

26. Dispositif de blocage (30) selon l'une quelconque des revendications 23 à 25, le support de blocage (31) étant fabriqué au moins en partie en plastique, de préférence en époxyde renforcé par des fibres de verre.

27. Dispositif de blocage (30) selon l'une quelconque des revendications 23 à 26, dans lequel les éléments de blocage (32) sont fabriqués au moins en partie en métal, de préférence en acier.

28. Élément de montage (40) pour recevoir des filières (10) pour frisage par refoulement, de préférence des filières (10) selon l'une quelconque des revendications 10 à 21, l'élément de montage (40) comprenant
au moins une poignée (41) et
un élément de réception (42) et
une fixation (43) qui est supportée de manière rotative dans l'élément de réception (32) ainsi qu'un élément d'actionnement (44) pour faire tourner la fixation (43),
la fixation (43) pouvant être déplacée entre une position de retenue pour retenir la filière (10) dans l'élément de réception (42) et une position de libération pour recevoir et délivrer la filière (10) .

29. Élément de montage (40) selon la revendication 28, dans lequel la fixation (43) est réalisée sous forme de cylindre ouvert dans la direction périphérique, de préférence sur approximativement la moitié de la périphérie.

30. Élément de montage (40) selon la revendication 28 ou 29, dans lequel l'élément de réception (42) présente un blocage de réception (421) pour le blocage de l'élément d'actionnement (44).

31. Élément de montage (40) selon la revendication 30, dans lequel le blocage de réception (421) est réalisé sous forme de goupille, qui peut être amenée dans une position de fermeture et une position d'ouverture, la goupille empêchant, dans la position de fermeture, un mouvement de rotation de l'élément d'actionnement (44).

32. Procédé de fabrication de fils frisés par refoulement, en particulier de fils multifilaments synthétiques, les fils étant frisés par refoulement à l'aide d'une pièce façonnée (12) selon l'une quelconque des revendications 1 à 8, d'un noyau de filière (60) selon la revendication 9 ou d'une filière (10) selon l'une quelconque des revendications 10 à 21.
